# EUROPEAN PATENT SPECIFICATION

(11) **EP 3 331 295 B1**
(45) Date of publication and mention of the grant of the patent: **02.07.2025**
(21) Application number: 16789087.0
(22) Date of filing: 09.03.2016
(51) Int. Cl.: H04W 72/0453, H04W 72/04, H04W 72/21

(54) **UPLINK CARRIER SELECTING METHOD, NETWORK SIDE ELEMENT, USER EQUIPMENT AND STORAGE MEDIUM**
UPLINK-TRÄGER-AUSWAHLVERFAHREN, NETZWERKSEITIGES ELEMENT, BENUTZERGERÄT UND SPEICHERMEDIUM
PROCÉDÉ DE SÉLECTION DE PORTEUSE DE LIAISON MONTANTE, ÉLÉMENT CÔTÉ RÉSEAU, ÉQUIPEMENT UTILISATEUR ET SUPPORT D'INFORMATIONS

(30) Priority: 31.07.2015 CN 201510466397
(43) Date of publication of application: 06.06.2018
(73) Proprietor: ZTE Corporation, Shenzhen, Guangdong 518057 (CN)
(72) Inventor: XU, Hanqing, Shenzhen Guangdong 518057 (CN); ZHAO, Yajun, Shenzhen Guangdong 518057 (CN); MO, Linmei, Shenzhen Guangdong 518057 (CN)
(74) Representative: Iannone, Carlo Luigi
(86) International application number: PCT/CN2016/076015
(87) International publication number: WO 2016/177093

(56) References cited:
- WO-A2-2015/042594
- CN-A- 104 301 273
- CN-A- 104 602 349
- CN-A- 104 683 080
- US-A1- 2013 336 180
- US-A1- 2015 098 397
- US-A1- 2015 124 740
- LG ELECTRONICS: "Necessary mechanisms and enhancements to support CA of up to 32 carriers", vol. RAN WG1, no. Athens, Greece; 20150209 - 20150213, 8 February 2015 (2015-02-08), XP050933421, Retrieved from the Internet <URL:http://www.3gpp.org/ftp/Meetings_3GPP_SYNC/RAN1/Docs/> [retrieved on 20150208]
- LG ELECTRONICS: "DL control enhancement for Rel-13 CA", vol. RAN WG1, no. Fukuoka, Japan; 20150525 - 20150529, 24 May 2015 (2015-05-24), XP050972498, Retrieved from the Internet <URL:http://www.3gpp.org/ftp/Meetings_3GPP_SYNC/RAN1/Docs/> [retrieved on 20150524]
- INSTITUTE FOR INFORMATION INDUSTRY (III): "UL Transmission for LAA", vol. RAN WG2, no. Fukuoka, Japan; 20150525 - 20150529, 24 May 2015 (2015-05-24), XP050972036, Retrieved from the Internet <URL:http://www.3gpp.org/ftp/Meetings_3GPP_SYNC/RAN2/Docs/> [retrieved on 20150524]

## Description

### TECHNICAL FIELD

The present disclosure relates to the technical field of carrier allocation, in particular, to a method, a network side element, a user equipment and a storage medium for selecting an uplink carrier.

### BACKGROUND

The usage of Long Term Evolution-Unlicensed (LTE-U) in Long Term Evolution (LTE) system refers to the deployment of LTE over unlicensed carriers to meet the increasing capacity requirements of LTE system and to increase the efficiency for using unlicensed frequency spectrum, and this is an important evolutionary direction for LTE and the future wireless communication. During the design of LTE-U, it is necessary to consider how to achieve a contention-free condition for using unlicensed carriers to conduct data transmission between LTE system and heterogeneous systems (such as a Wireless Fidelity (WiFi), radar and the like) and homogeneous system (such as LTE-U) in a fair and friendly manner. According to the presentation of the 3GPP standard conference, LTE-U system is also referred to as LTE Licensed Assisted Access (LAA) system.

Currently, the manner for using unlicensed frequency spectrum in LAA includes Carrier Aggregation Supplemental Downlink (CASDL), Carrier Aggregation Time Division Duplex (CATDD) and Standalone.

The frequency spectrum in 5G is rich in unlicensed carrier resources and may include up to 24 unlicensed carriers of 20MHz-bandwdth (the specific frequency band and number of the unlicensed carriers may vary depending on the rules and requirements of different countries or regions). Thus, in a scenario of multiple unlicensed carriers, LAA access points or UEs may scan and listen multiple unlicensed carriers, and select preferentially one or more unlicensed carriers with relative low load or select the cleanest unlicensed carriers before using the multiple unlicensed carriers, so as to ensure the principle of friendly coexistence and to improve the efficiency in frequency spectrum usage.

At present, a User Equipment (UE) with a carrier aggregation (CA) capability may aggregate 5 component carriers and receive a Physical Downlink Shared Channel (PDSCH) simultaneously. The number of carriers for aggregating carriers and transmitting PDSCH simultaneously or aggregation capability in the uplink direction is less than that in the downlink direction. That is to say, the uplink carrier aggregation capability of the UE is generally less than or equal to 5 component carriers. Although 3GPP is developing in the carrier aggregation enhancement with more than 5 component carriers (in some example, up to 31 component carriers), carrier aggregation for multiple components may lead to baseband complexity, especially for radio frequency, which results in high complexity for the design of UEs and increased costs.

When the UE needs to conduct uplink data transmission, it may perform Listen before Talk/Clear Channel Assessment (LBT/CCA) operation on the scheduled carriers to select one or more unlicensed carriers for data transmission according to an uplink scheduling grant sent by a base station. If all carriers for performing LBT are occupied, data transmission cannot be performed temporarily. The uplink scheduling grant may be limited by the uplink carrier aggregation capability of the UE. For example, when uplink CA capability of the UE is equal to 2, that is, the UE can aggregate no more than 2 component carriers and send a PUSCH simultaneously, the base station or the LAA access point may schedule no more than 2 unlicensed carriers simultaneously and this UE accordingly may perform LBT or CCA over these two unlicensed carriers, which gives the UE a small possibility for data transmission. Thus, there is a need to increase uplink sending opportunity for UEs, so as to improve the system performance and the efficiency in usage of unlicensed frequency spectrum.

WO2015042594 discloses uplink waveforms for operating long term evolution (LTE) in an unlicensed band (i.e., long term evolution-unlicensed (LTE-U) communication). Carrier aggregation (CA) and standalone (SA) are disclosed. LTE on the licensed channel may provide both control and data, LTE on the unlicensed channel may provide data. Managing variable transmission time interval (TTI) continuous transmission is disclosed for transmission over multiple subframes of an unlicensed carrier in LTE-U. Listen-before-talk (LBT) requirements of unlicensed carriers provide for additional channel occupancy constraints when scheduling resources for multiple UEs for variable TTI continuous uplink transmissions over multiple subframes. A joint control channel is disclosed that provides control information for all of the potentially available subframes to be scheduled for the uplink transmissions. In addition to management of the variable TTI continuous transmissions, adjustments to uplink signal parameters are also disclosed that address the constraints due to the LBT requirements of unlicensed carriers. 3GPP document "UL Transmission for LAA", INSTITUTE FOR INFORMATION INDUSTRY (III), R2-152343, 24 May 2015, discusses uplink resource allocation schemes and UE group based uplink grants.

### SUMMARY

In order to solve the above technical problems, embodiments of the present disclosure provide a method, a network element at a network side, an user equipment and a storage medium for selecting an uplink carrier.

According to an aspect of the invention, there is provided a method for selecting an uplink carrier as set out in claim 1. According to another aspect of the invention, there is provided a method for selecting an uplink carrier as set out in claim 4. According to another aspect of the invention, there is provided a network element at a network side as set out in claim 8. According to another aspect of the invention, there is provided a user equipment as set out in claim 11. According to another aspect of the invention, there is provided a storage medium as set out in claim 14. Optional features are set out in the dependent claims.

In the technical solutions provide by the embodiments of the present disclosure, a capability of a network side for scheduling the number of unlicensed uplink carriers for a User Equipment (UE) is greater than the number of carriers that is supported by an uplink carrier aggregation capability of the UE, or the capability of the network side for scheduling the number of unlicensed uplink carriers for the UE is less than or equal to the number of carriers that is supported by the uplink carrier aggregation capability of the UE. The UE may select a carrier capable of being used for uplink data transmission from the scheduled unlicensed carriers. In the case that the capability of the network side for scheduling the number of unlicensed uplink carriers for the UE is less than or equal to the number of carriers that is supported by the uplink carrier aggregation capability of the UE, if the UE cannot select a carrier capable of being used for uplink data transmission from the scheduled unlicensed uplink carriers, the UE may select a carrier capable of being used for uplink data transmission from a set of the candidate carriers notified by the network side or select a carrier capable of being used for uplink data transmission from the currently listened clear carriers. The present disclosure can improve efficiency for transmitting uplink data by the UE and thereby the UE can select uplink carriers as many as possible for uplink data transmission.

### BRIEF DESCRIPTION OF THE DRAWINGS

Fig. 1 is a flow chart showing a method for selecting an uplink carrier according to an embodiment of the present disclosure;
Fig. 2 is a flow chart showing a method for selecting an uplink carrier according to an embodiment of the present disclosure;
Fig. 3 is a block diagram showing a network element at a network side according to an embodiment of the present disclosure; and
Fig. 4 is a block diagram showing a structure of a user equipment according to an embodiment of the present disclosure.

### DETAILED DESCRIPTION

Hereinafter, the present disclosure will be described in detail with reference to the accompanying drawings and embodiments in order to facilitate understanding of the features and technical solutions of the present disclosure. It should be noted that the drawings are merely for illustration and are not intended to limit the embodiments of the present disclosure.

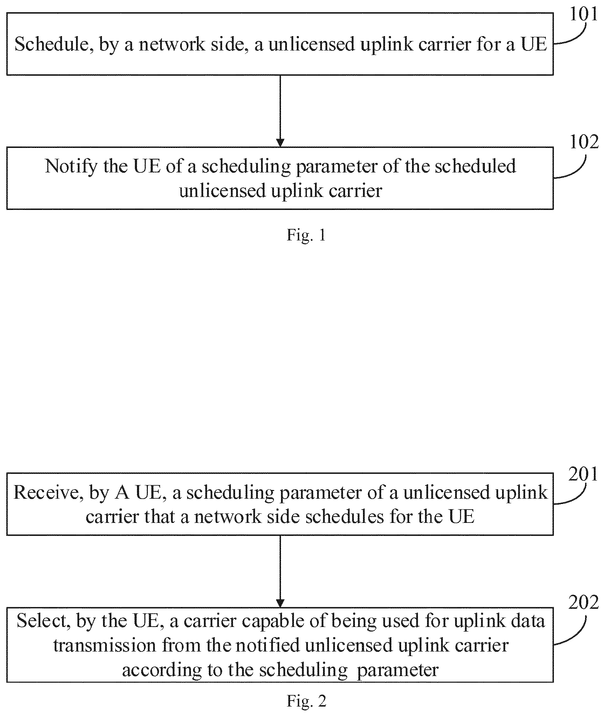

Fig. 1 is a flow chart showing a method for selecting an uplink carrier according to an embodiment of the present disclosure. As shown in Fig. 1, the method for selecting an uplink carrier provided by the embodiment of the present disclosure includes the following steps.

In step 101, a network side schedules an unlicensed uplink carrier for a UE.

A capability of the network side for scheduling the number of unlicensed uplink carriers for a User Equipment (UE) being greater than the number of carriers that is supported by an uplink carrier aggregation capability of the UE, or the capability of the network side for scheduling the number of unlicensed uplink carriers for the UE being less than or equal to the number of carriers that is supported by the uplink carrier aggregation capability of the UE.

In an embodiment of the present disclosure, for the purpose of obtaining a higher efficiency of uplink data transmission by the UE, uplink carriers are scheduled as many as possible for the UE, so as to enable the UE to select the corresponding uplink carriers for carrier aggregation and to transmit uplink data with the highest carrier aggregation capability.

In an embodiment of the present disclosure, when the capability of the network side for scheduling the number of unlicensed uplink carrier for the UE is greater than the number of carriers that is supported by an uplink carrier aggregation capability of the UE, the number of carriers capable of being used for uplink data transmission which are selected by the UE from notified unlicensed uplink carriers is less than or equal to the number of carriers that is supported by the uplink carrier aggregation capability of the UE.

In order to enable the UE to transmit uplink data using the highest carrier aggregation capability, the number of unlicensed uplink carriers scheduled for the UE is preferably greater than the maximum number of carriers that is supported by the uplink carrier aggregation capability of the UE, such that the UE may select the number of the carriers equal to the maximum number of carriers that is supported by its uplink carrier aggregation capability to perform uplink carrier aggregation, and thus the number of the carriers for uplink data transmission is maximized, thereby improving the efficiency of uplink data transmission.

In an embodiment of the present disclosure, if the capability of the network side for the number of scheduled unlicensed uplink carriers for the UE is less than or equal to the number of carriers that is supported by an uplink carrier aggregation capability of the UE, the network side notifies the UE of a set of candidate uplink carriers capable of being used for uplink data transmission.

The network side notifies the UE of a scheduling parameter of a carrier in the set of the candidate uplink carriers; or the network side notifies the UE of a correspondence relationship between a carrier in the set of the candidate uplink carriers which uses the same scheduling parameter as the scheduling parameter of the unlicensed uplink carrier scheduled for the UE and the unlicensed uplink carrier scheduled for the UE. By doing so, the UE preferentially selects the carrier capable of being used for uplink data transmission from the scheduled unlicensed uplink carriers, and when the number of the selected uplink carriers is less than the number of carriers that is supported by an uplink carrier aggregation capability of the UE, the UE selects a carrier capable of being used for uplink data transmission from the set of the candidate uplink carriers.

The number of the carriers in the set of the candidate uplink carriers is greater than, or less than or equal to the number of carriers that is supported by the uplink carrier aggregation capability of the UE.

If the capability of the network side for scheduling the number of unlicensed uplink carrier for the UE is less than or equal to the number of carriers that is supported by an uplink carrier aggregation capability of the UE, the number of the unlicensed uplink carriers selected by the UE for uplink data transmission may be less than the maximum number of carriers that is supported by its uplink carrier aggregation capability. Thus, in the embodiment of the present disclosure, the network side also send to the UE the set of the candidate uplink carriers capable of being used for uplink data transmission, such that when the number of the uplink carriers selected by the UE for carrier aggregation does not reach the maximum value, the UE selects a uplink carrier from the set of the candidate uplink carriers.

In an embodiment of the present disclosure, the network side uses control signaling to schedule one or more unlicensed uplink carriers for the UE.

The scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

In order to make interaction signaling between the network side and the UE as little possible, the scheduling parameters of the carriers in the set of the candidate uplink carriers may be the same as those of the scheduled unlicensed uplink carriers as much as possible, such that when the network side notifies the UE of the scheduling parameters of the scheduled unlicensed uplink carriers, the scheduling parameters of the carriers in the set of the candidate uplink carriers are equivalently notified to the UE, without conducting additional notification for the scheduling parameters of the carriers in the set of the candidate uplink carriers.

In an embodiment of the present disclosure, if the capability of the network side for scheduling the number of unlicensed uplink carrier for the UE is less than or equal to the number of carriers that is supported by an uplink carrier aggregation capability of the UE and the UE cannot select a carrier capable of being used for uplink data transmission from the scheduled unlicensed uplink carriers, the network side receives a scheduling parameter(s) of other non-scheduled clear carriers that are listened by the UE, as encompassed by the claimed invention, and may indicate the UE to select a carrier capable of being used for uplink data transmission from the clear carriers, the scheduling parameter of other non-scheduled clear carriers is reported by the UE.

In the embodiment of the present disclosure, in the case when the network side has scheduled an unlicensed uplink carrier for the UE, and it is found that the currently scheduled unlicensed uplink carrier cannot be used by the UE to transmit uplink data while the network side does not notify the UE of a set of candidate uplink carrier, at this time, the UE needs to listen other clear carriers and reports the listening result for the other clear carriers to the network side, as encompassed by the claimed invention. In this way, these clear carriers may be used for uplink data transmission to improve the efficiency of uplink data transmission of the UE and the case in which no carrier resource is available may not occur.

In the step 102, a scheduling parameter of a scheduled unlicensed uplink carrier is notified to the UE.

The purpose of notifying the UE of the scheduling parameter of the scheduled unlicensed uplink carrier is to enable the UE to select a carrier capable of being used for uplink data transmission from notified unlicensed uplink carriers.

In an embodiment of the present disclosure, the scheduling parameter includes at least one of a time-frequency resource allocation parameter, frequency-hopping, a modulation and encoding scheme, a redundancy version and a transmit power control (TPC) instruction of a physical uplink shared channel (PUSCH).

In an embodiment of the present disclosure, the network side notifies the UE of a scheduled parameter of the unlicensed uplink carrier scheduled for the UE, and thus it is ensured that the UE may accurately listen to an unlicensed uplink carrier and use the listened available uplink carrier to conduct uplink carrier aggregation and uplink data transmission.

The method for selecting an uplink carrier provided by the embodiment is suitable for a network side device.

Fig. 2 is a flow chart showing a method for selecting an uplink carrier according to an embodiment of the present disclosure. As shown in Fig. 2, the method for selecting an uplink carrier includes the following steps.

In step 201, a UE receives a scheduling parameter of unlicensed uplink carriers that a network side schedules for the UE.

A capability of the network side for scheduling the number of unlicensed uplink carriers for the UE is greater than the number of carriers that is supported by an uplink carrier aggregation capability of the UE, or the capability of the network side for scheduling the number of unlicensed uplink carriers for the UE is less than or equal to the number of carriers that is supported by the uplink carrier aggregation capability of the UE.

In an embodiment of the present disclosure, the network side schedules a unlicensed uplink carrier for the UE and notifies the UE of the scheduling parameter of the scheduled unlicensed uplink carrier, so as to enable the UE to select a carrier capable of being used for uplink data transmission for uplink carrier aggregation.

In step 202, the UE selects a carrier capable of being used for uplink data transmission from notified unlicensed uplink carriers.

In an embodiment of the present disclosure, if the capability of the network side for scheduling unlicensed uplink carrier number for the UE is greater than the number of carriers that is supported by an uplink carrier aggregation capability of the UE, the number of the carriers capable of being used for uplink data transmission which are selected by the UE from the notified unlicensed uplink carriers is less than or equal to the number of carriers that is supported by the uplink carrier aggregation capability of the UE.

When the network side merely notifies the UE of unlicensed uplink carriers, the UE selects a carrier (or carriers) capable of being used for uplink data transmission from the notified unlicensed uplink carriers. In this case, the number of the notified unlicensed carriers is greater than the maximum number of carriers that is supported by the uplink carrier aggregation capability of the UE, but the UE can select the number of the unlicensed uplink carriers less than or equal to the number of carriers that is supported by the uplink carrier aggregation capability of the UE.

In an embodiment of the present disclosure, if the capability of the network side for scheduling the number of unlicensed uplink carrier for the UE is less than or equal to the number of carriers that is supported by an uplink carrier aggregation capability of the UE, the UE receives a set of candidate uplink carriers capable of being used for uplink data transmission which are sent by the network side and a scheduling parameter of a carrier in the set of the candidate uplink carriers.

The UE preferentially selects the carrier capable of being used for uplink data transmission from the scheduled unlicensed uplink carriers according to the scheduling parameter, and when the number of the selected uplink carriers is less than the number of carriers that is supported by an uplink carrier aggregation capability of the UE, the UE selects a carrier (or carriers) capable of being used for uplink data transmission from the set of the candidate uplink carriers.

The number of carriers in the set of the candidate uplink carriers is greater than, or less than or equal to the number of carriers that is supported by an uplink carrier aggregation capability of the UE.

In order to ensure the efficiency of uplink data transmission of the UE, when the number of the unlicensed uplink carriers which the network side schedules for the UE is less than or equal to the maximum number of carriers that is supported by an uplink carrier aggregation capability of the UE, the network side may send to the UE a set of candidate uplink carriers capable of being used for uplink data transmission, such that the UE may select a carrier (or carriers) from the set of the candidate uplink carriers to conduct uplink data transmission.

In an embodiment of the present disclosure, control signaling or scheduling signaling is used by the network side to schedule one or more unlicensed uplink carriers for the UE. The scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

In an embodiment of the present disclosure, if the capability of the network side for scheduling the number of unlicensed uplink carrier for the UE is less than or equal to the number of carriers that is supported by an uplink carrier aggregation capability of the UE and the UE cannot select a carrier capable of being used for uplink data transmission from the scheduled unlicensed uplink carriers according to the scheduling parameter, the UE may listen other non-scheduled clear carriers and send information of the found clear carriers and a scheduling parameter of the clear carriers to the network side, in accordance with the claimed invention.

In an embodiment of the present disclosure, when the number of the unlicensed uplink carriers which the network side notifies the UE is small and the network side does not notify the UE of a set of candidate uplink carriers, the UE may listen other clear carriers to detect whether there is any carrier capable of being used for uplink data transmission.

In an embodiment of the present disclosure, before the clear carriers are listened and used by the UE for uplink data transmission, the method further includes the following steps.

The UE sends a reserved signal or a reserved channel to the network side over the clear carriers. The reserved signal or the reserved channel includes at least one of an uplink reference signal, an uplink control channel, control information and broadcast information.

In an embodiment of the present disclosure, specifically, the UE sends to the network side the information of the clear carriers, information of the scheduling parameter of the clear carriers and the reserved signal or the reserved channel over licensed carriers or a primary serving cell.

In an embodiment of the present disclosure, the scheduling parameter includes at least one of a time-frequency resource allocation parameter, frequency-hopping, a modulation and encoding scheme, a redundancy version and a transmit power control (TPC) instruction of a physical uplink shared channel (PUSCH).

The method for selecting an uplink carrier in the example is suitable for a UE.

The description will be given to the gist of the technical solutions provided by embodiments of the present disclosure by the following specific examples.

### Example 1

The number of uplink carriers scheduled by a base station may be greater than an uplink carrier aggregation (CA) capability of a UE (i.e., the maximum number of carriers that can be aggregated by the UE to transmit PUSCH simultaneously). Or, the number of carriers scheduled by the base station may be less than or equal to the uplink CA capability of the UE. In general, it is preferable that the number of the scheduled carriers is greater than or equal to the uplink CA capability of the UE, so as to increase the possibility for transmitting uplink data by the UE over unlicensed frequency spectrum and improve system performance.

After receiving a scheduling grant sent by the base station, the UE may listen the uplink carriers scheduled by the base station and select n carriers for data transmission according to a listening result or a carrier selecting result, where n<=C_{UL} and C_{UL} is the maximum number of carriers that can be aggregated by the UE to transmit PUSCH.

In order to decrease a downlink signaling overhead for sending the uplink scheduling grant, a scheduling grant parameter of the scheduled uplink carriers may be restricted. The uplink scheduling grant parameter may include at least one of a time-frequency resource allocation parameter, frequency-hopping, a modulation and encoding scheme, a redundancy version, a transmit power control (TPC) instruction for scheduling a physical uplink shared channel (PUSCH) and/or the like. For example, some or all of the unlicensed carriers in a uplink carriers scheduling set may be restricted to use the same scheduling parameter, such that the base station may only need to send one or a small number of scheduling parameters.

The method for selecting an uplink carrier in the example includes the following steps.

In step 1, a base station selects one or more unlicensed carriers according to long-term energy detection or carrier sensing, or the base station directly configures one or more unlicensed carriers as the candidate carriers for uplink transmission.

For example, the maximum number of unlicensed carriers that may be employed by the base station is N1. The set of these N1 unlicensed carriers is SetA. The frequency range and the number of the carriers in SetA depend on the factors such as national and regional regulations, operator allocation, support capability of equipment or the like. According to long-term energy detection or carrier sensing, the base station may select from the set SetA one or more unlicensed carriers as a set of uplink (or downlink) transmission candidate carriers (SetB). SetB may include N2 unlicensed carriers. The factors for selecting the carriers in SetB include load conditions, interference conditions and the occupation conditions of the carriers in SetA, where N2<=N1.

Alternatively, the base station may directly configure carriers without long-term energy detection and carrier sensing. For example, the base station may directly configure all of the N1 unlicensed carriers as candidate carriers for uplink transmission and in this case, N2=N1. In other examples, the base station may configure some of unlicensed carriers in SetA as candidate carriers for uplink transmission according to the current carrier condition without long-term detection and sensing, and in this case, N2<N1.

In other embodiments, the step 1 and the step 2 below can be combined into one step and the base station may schedule the carriers in the set of the carriers generated in step 1 to be uplink carriers, that is to say, the set SetB of candidate carriers for uplink transmission is the uplink carriers scheduling set in step 2.

In step 2, if there is a uplink transmission request or an uplink scheduling request from a UE is received, the base station sends to the UE a scheduling grant. The number of the scheduled uplink carriers may be greater than the uplink CA capability of the UE, or may be less than or equal to the uplink CA capability of the UE.

It is assumed that a downlink CA capability of a UE is C_{DL}, its uplink CA capability is C_{UL}, and the scheduled set of uplink carriers sent by the base station is SetC (the base station may not be necessary to directly send the scheduled set SetC, in an example, the base station may send an uplink scheduling grant and the scheduled carriers in the uplink scheduling grant may be combined into the SetC). The SetC may include N3 unlicensed carriers, N3<=N2.

The base station may directly schedule the carriers in the set of carriers generated in step 1 as uplink carriers, that is to say, steps 1 and 2 can be combined into one step. This includes two meanings: one is that the base station may directly schedule some or all of carriers in the SetA as carriers for uplink transmission according to current carrier condition; the other is that the base station may obtain a set SetB of candidate carriers according to long-term energy detection or carrier sensing and this set SetB is the scheduled set SetC of the uplink carriers.

In an embodiment, the base station may screen carriers in the set SetB and select one or more carriers as scheduled carriers according to current loads or interference conditions of carriers. It is assumed that the scheduled set of uplink carrier sent by the base station is SetC and the SetC includes N3 unlicensed carriers, N3<=N2.

The number N3 of the scheduled uplink carriers may be greater than or equal to C_{UL}, or may be less than C_{UL}. In general, in order to increase the possibility for uplink transmission by the UE and improve the system performance, it is preferable to schedule the number N3 of uplink carriers greater than the uplink CA capability of the UE. If the number of unlicensed carriers initially available for the base station is relative small, or the loads of most carriers are high or interference is relative serious, then N3 may be less than C_{UL}.

In order to decrease a downlink signaling overhead for sending an uplink scheduling grant, a scheduling grant parameter of the scheduled uplink carriers may be restricted. The uplink scheduling grant parameter may include at least one of a time-frequency resource allocation parameter, frequency-hopping, a modulation and encoding scheme, a redundancy version, a transmit power control (TPC) instruction for scheduling a physical uplink shared channel (PUSCH) and/or the like.

For example, some or all of unlicensed carriers in a scheduled set of uplink carriers may be restricted to use the same scheduling parameter, such that the network side may use scheduling signaling or control signaling to schedule one or more unlicensed uplink carriers for the UE. For example, all unlicensed carriers in the scheduled set may use the same scheduling parameters, such as the same time-frequency resource allocation parameter, the same modulation and encoding scheme or the like. As a result, it is only needed to send to the UE the serial numbers of the scheduled carriers and a common set of the scheduling parameters when the base station schedules carriers. In other examples, several unlicensed carriers in the scheduled set may use the same scheduling parameters and others in the scheduled set may use other same scheduling parameters, and as a result, it is only needed to send the UE the serial numbers of the scheduled carriers and the corresponding common sets of scheduling parameters when the base station schedules carriers. In this case, there are two sets of the scheduling parameters. When restricting the scheduling parameters of the carriers in the scheduled set, the base station may preferentially define that the carriers that have similar load conditions, similar interference conditions or similar scheduling conditions to use the same scheduling parameters. In this manner, the downlink signaling overhead can be greatly decreased.

In step 3, after receiving the scheduling grant of the base station, the UE listens the unlicensed carriers in the scheduled set of the uplink carriers and selects one or more carriers as the carriers for uplink transmission. The number of the selected carriers for uplink transmission is less than or equal to the uplink CA capability of the UE.

After receiving the scheduling grant of the base station, the UE may listen the carriers in the scheduled set SetC of the uplink carriers and find that there are N4 unlicensed clear carriers.

If N4=0 (i.e., there is no clear carriers available for the UE), the UE may proceed to execute LBT or CAA until an available clear carrier is found. Alternatively, the UE may proceed to execute LBT or CAA for a time period and if no clear carrier is detected when a preset timer Tₜᵢₘₑᵣ is expired, the UE may resend an uplink scheduling request or reinitiate an RACH procedure.

If 0<N4<= C_{UL}, that is, the number of the clear carriers is within the uplink aggregation capability of the UE, the UE may send PUSCH or other signal/channel simultaneously over these N4 carriers according to an uplink scheduling grant parameter sent by the base station.

If N4> C_{UL}, that is, the number of the clear carriers is greater than the uplink aggregation capability of the UE, the UE may randomly select C_{UL} carriers (or less than C_{UL} carriers) from the clear carriers as carriers for its uplink transmission. Alternatively, the UE may select one or more unlicensed carriers (the number of the selected carriers is less than or equal to C_{UL}) as the carriers for uplink transmission according to current or previous RRM measurement results or CSI measurement results (such as RSSI measurement results).

In addition, because it is needed for the uplink transmission of the UE to follow a timing relationship between the uplink and downlink directions, there is a delay from the time when a clear carrier is listened by the UE to the time when the UE conducts uplink data transmission. During this delay, the UE needs to send a reserved signal or a reserved channel over the above selected clear carrier to reserve a channel. The reserved signal may be a reference signal, a control channel or control/broadcast information.

### Example 2

The number of uplink carriers scheduled by a base station is less than or equal to the uplink CA capability of a UE, that is, the maximum number of carriers that can be aggregated by the UE to transmit PUSCH. In addition, the base station indicates the UE to listen a set of candidate uplink carriers available for uplink transmission. The set of the candidate uplink carriers may be greater than the uplink CA capability of the UE, that is, may be greater than the number of the scheduled uplink carriers.

Because the base station may merely send the corresponding scheduling parameter(s) of the carriers in the scheduled set, if the UE detects that there is no scheduled carrier available, the UE may detect carriers in the set of candidate uplink carriers other than the scheduled carriers in the set of candidate uplink carriers. However, UE cannot know how to send time-frequency resources or conduct modulation and encoding over the other candidate carriers. Thus, it is necessary for the base station and the UE to define the scheduling parameter of the carriers in the set of the candidate uplink carriers. For example, the base station and the UE may conduct information exchange to achieve handshake, or a mandatory agreement may be established between the base station and the UE.

For example, it may be defined that the carriers in the set of the candidate uplink carriers may use the same scheduling parameter as that of the carriers in the scheduled set of the uplink carriers, or scheduling parameters of one or more carriers in the set of the candidate uplink carriers are the same as those of the one or more carriers in the scheduled set of the uplink carriers.

After receiving the scheduling grant of the base station and/or the set of the candidate uplink carrier, the UE may listen the unlicensed carriers in the scheduled set or the set of candidate uplink carriers and select one or more carriers as the carriers for uplink transmission to transmit data simultaneously. The number of the selected carriers for uplink transmission is less than or equal to the uplink CA capability C_{UL} of the UE and C_{UL} is the maximum number of carriers that can be aggregated by the UE to transmit PUSCH. In this case, it is preferable for the UE to employ the carriers in the scheduled set for uplink transmission. Specifically, when the number of the clear carriers in the scheduled set is equal to the uplink CA capability C_{UL}, although there exists a clear carrier in the set of the candidate uplink carrier, the UE may merely employ these C_{UL} clear carriers in the scheduled set to transmit PUSCH simultaneously.

The method for selecting uplink carriers may include the following steps.

In step 1, a base station selects one or more unlicensed carriers according to long-term energy detection or carrier sensing, or the base station directly configures one or more unlicensed carriers as the candidate carriers for uplink transmission.

For example, the maximum number of unlicensed carriers that may be employed by the base station is N1. The set of these N1 unlicensed carriers is SetA. The frequency range and the number of the carriers in SetA depend on the factors such as national and regional regulations, operator allocation, support capability of equipment or the like. According to long-term energy detection or carrier sensing, the base station may select one or more unlicensed carriers as a set of uplink (or downlink) transmission candidate carriers (SetB). SetB may include N2 unlicensed carriers. The factors for selecting the carriers in SetB include load conditions, interference conditions and the occupation conditions of the carriers in SetA, where N2<=N1.

Alternatively, the base station may directly configure carriers without long-term energy detection and carrier sensing. For example, the base station may directly configure all of the N1 unlicensed carriers as candidate carriers for uplink transmission and in this case, N2=N1. In other examples, the base station may configure some of unlicensed carriers in SetA as candidate carriers for uplink transmission according to the current carrier condition without long-term detection and sensing, and in this case, N2<N1.

In the step 2, if there is a uplink transmission request or an uplink scheduling request from a UE is received, the base station sends to the UE a scheduling grant. The number of the scheduled uplink carriers may be less than or equal to the uplink CA capability of the UE. In addition, the base station may indicate the UE to listen a set of candidate carriers available for uplink transmission. The set of the candidate uplink carriers may be greater than the uplink CA capability of the UE, that is, greater than the number of the scheduled uplink carriers.

It is assumed that a downlink CA capability of a UE is C_{DL}, its uplink CA capability is C_{UL}, and the scheduled set of uplink carriers sent by the base station is SetC (the base station may not directly send the scheduled set SetC, and in an example, the base station may send an uplink scheduling grant and the scheduled carriers in the uplink scheduling grant may be combined into SetC). The SetC may include N3 unlicensed carriers, N3<=N2. These N3 carriers can be selected from the N2 carriers in the SetB.

It is assumed that a set of candidate uplink carriers which are sent by the base station, listened by the UE and available for uplink transmission is SetD, and SetD may be equal to SetB. That is to say, the set SetB of the carriers generated in step 1 is the set SetD of the candidate uplink carriers which are sent to the UE.

Alternatively, the base station may screen carriers in set SetB and select one or more carriers as the set SetD of candidate uplink carriers according to current loads or interference conditions of carriers.

The set SetD of candidate uplink carriers may include the carriers in the scheduled set SetC of the uplink carriers. In other example, in order to decrease a signaling overhead, the set SetD of candidate uplink carriers may not include the carriers in the scheduled set SetC of the uplink carriers but may include the carriers other than the carriers in SetC. According to an embodiment, the set SetD of candidate uplink carriers may include the carriers in the scheduled set SetC of the uplink carriers. In this case, the number of the carriers in the set SetD is generally greater than or equal to the number of the carriers in the set SetC.

The base station may transmit an uplink scheduling grant and a set of candidate uplink carriers simultaneously; or there may be a delay between the transmissions of the uplink scheduling grant and the set of the candidate uplink carriers. In an embodiment, the uplink scheduling grant may be transmitted before the set of the candidate uplink carriers is transmitted. In other embodiment, the uplink scheduling grant may be transmitted after the set of the candidate uplink carriers is transmitted.

Because the base station may send the corresponding scheduling parameter of the carriers in the scheduled set SetC, if the UE detects that there is no scheduled carrier available or the number of the available carriers is less than the uplink CA capability, the UE may detect carriers in the SetD other than the SetC. However, UE cannot know how to send time-frequency resources or conduct modulation and encoding over the other candidate carriers. Thus, it is necessary for the base station and the UE to define the scheduling parameter of the carriers in the set of the candidate uplink carriers. For example, the base station and the UE may conduct information exchange to achieve handshake, or a mandatory agreement may be established between the base station and the UE.

For example, it may be defined that the carriers in the set SetD of the candidate uplink carriers use the same scheduling parameter as that of the carriers in the scheduled set SetC of the uplink carriers, or scheduling parameters of one or more carriers in the set SetD of the candidate uplink carriers are the same as those of the one or more carriers in the scheduled set SetC of the uplink carriers. In this case, it is needed to clarify a correspondence relationship between the carriers in the two sets which use the same scheduling parameters. If the UE selects a carrier in the SetD for uplink transmission, the UE selects the same scheduling parameters as that of the carriers in the SetC for uplink transmission regardless of whether the carrier is in the scheduled set SetC. The uplink scheduling parameter may include at least one of a time-frequency resource allocation parameter, frequency-hopping, a modulation and encoding scheme, a redundancy version, a transmit power control (TPC) instruction of a physical uplink shared channel (PUSCH) and/or the like.

If the base station defines the scheduling parameters of the carriers in the two sets, the base station may preferentially define that the carriers having similar load conditions, similar interference conditions or similar scheduling conditions use the same scheduling parameters. In this manner, the downlink signaling overhead can be greatly decreased. If all carriers in the scheduled set use the same scheduling parameter, the base station may not need to send to the UE the mapping relationship between the carriers that use the same scheduling parameter. If the scheduling parameters of the carriers in the scheduling set are different, the base station may need to send to the UE the mapping relationship between the carriers that use the same scheduling parameter.

For example, the uplink CA capability C_{UL} of the UE is equal to 2, the scheduled set SetC of the uplink carriers is {CC1, CC2 }, and the set SetD of the candidate uplink carriers is {CC1, CC2, CC3, CC4, CC5}. If the UE detects that two carriers in the SetC are not available, the UE may detect other carriers CC3, CC4 and CC5 in the SetD than the SetC. However, the UE cannot know how to send time-frequency resources or conduct modulation and encoding over these candidate carriers. If it is defined that the carriers in the SetC use the same scheduling parameter, the carriers in the SetD may use the same scheduling parameter as that of the carriers in the SetC; if the carriers in the SetC use different scheduling parameters, the base station may need to send to UE the mapping relationship between the carriers that use the same scheduling parameter. For example, the set of the candidate uplink carriers is sent in the following manner: SetD={CC1: CC3,CC4; CC2: CC5}, where CC1 and CC2 are the carriers that are scheduled by the base station, CC3 and CC4 are the candidate carriers for CC1 and both of them use the same scheduling parameter as that of CC1, and CC5 is the candidate carrier for CC2 and uses the same scheduling parameter as that of CC2.

In addition, when the base station schedules the same carrier for two or more UEs to conduct uplink transmission simultaneously, the resource serial number and corresponding resource position in the scheduling parameters of the UEs may be different. For example, the base station schedules CC1 for UE1 and UE2 to conduct uplink transmission simultaneously and the time-frequency resources of UE1 and UE2 over CC1 may not overlap. However, when the base station schedules CC1 and CC2 as the uplink transmission carriers for UE1 and UE2, respectively, UE1 and UE2 may use the resource blocks with the overlapped or partially overlapped position in different carriers since CC1 and CC2 are different carriers, that is to say, the resource block parameter values in the scheduling parameters may be overlapped. When CC1 and CC2 are not available, CC3 is the candidate carrier for these two scheduled carriers. If both UE1 and UE2 use CC3 as the carrier for uplink transmission, UE1 may use the scheduling parameter of CC1 and UE2 may use the scheduling parameter of CC2. When these two scheduling parameters are mapped onto CC3 simultaneously, resource overlap may occur and collision may occur if the two UEs transmit data over CC3 simultaneously. This problem may be solved by the following two solutions: one is to use a back-off window when the two UEs compete with each other, that is, the two UEs may not transmit data simultaneously, once the UE who transmits data later finds that the resource is occupied, its transmission is delayed; the other is to avoid the same candidate carrier to use the scheduling parameter of these different scheduled carriers when the scheduling parameters (especially a time-frequency resource) over the deferent scheduling carriers are the same and overlapped.

In step 3, after receiving the scheduling grant of the base station and/or a set of candidate uplink carriers, the UE listens the unlicensed carriers in the scheduled set and the set of the candidate uplink carriers and selects one or more carriers as the carriers for uplink transmission. The number of the selected carriers for uplink transmission is less than or equal to the uplink CA capability of the UE.

After receiving the scheduling grant of the base station and/or a set of candidate uplink carriers, the UE may listen the carriers in the scheduled set SetC and the set SetD of the candidate uplink carriers, and find that there are N4 unlicensed clear carriers.

If N4=0 (i.e., there is no clear carriers available for the UE in the two sets), the UE may proceed to execute LBT or CAA until an available clear carrier is found. Alternatively, the UE may proceed to execute LBT or CAA and if no clear carrier is detected when a preset timer Tₜᵢₘₑᵣ is expired, the UE may resend an uplink scheduling request or reinitiates an RACH procedure.

If N4>0 and there is an available clear carrier in the scheduled set SetC of uplink carriers, the UE may preferentially use the carrier in the SetC for uplink transmission. Specifically, when the number of clear carriers in the SetC is equal to uplink CA capability C_{UL}, although there exists a clear carrier in the SetD, the UE may merely use these C_{UL} clear carriers in the SetC to transmit PUSCH simultaneously. Specifically, when the number of clear carriers in the SetC is less than uplink CA capability C_{UL}, the UE may merely use clear carriers in the SetC to transmit PUSCH simultaneously or may additionally aggregate other clear carriers in the SetD to transmit the PUSCH simultaneously. The number of the carriers in the two sets which are used to transmit PUSCH simultaneously is less than or equal to C_{UL}.

If N4>0 and there is no available clear carrier in the scheduled set SetC of uplink carriers, the UE may use the clear carriers in the SetD to transmit PUSCH simultaneously. The number of the carriers in the SetD which are used for transmitting PUSCH simultaneously is less than or equal to C_{UL}. If N4> C_{UL}, that is, the number of the clear carriers in the SetD is greater than the uplink aggregation capability of the UE, the UE may randomly select C_{UL} carriers (or less than C_{UL} carriers) as carriers for its uplink transmission. Alternatively, the UE may select one or more unlicensed carriers (the number of the selected carriers is less than C_{UL}) as the carriers for uplink transmission according to current or previous RRM measurement results or CSI measurement results (such as RSSI measurement results).

If the UE use the carriers other than the carriers in SetC to conduct uplink transmission, it needs to use the same scheduling parameter as that of one or more or all of the carriers in the SetC. The scheduling parameter may include a time-frequency resource allocation, frequency-hopping, a modulation and encoding scheme, a redundancy version and/or a TPC instruction for scheduling PUSCH. A correspondence relationship between the carriers in the two sets which use the same scheduling parameter shall be clarified by the base station, negotiated between the base station and the UE or selected by the UE. If the correspondence relationship between the scheduling parameter and the carriers is clarified by the base station side, the base station needs to send to the UE the correspondence relationship between carriers in the two sets which use the same scheduling parameter. Or, if the correspondence relationship is negotiated between the base station and the UE (e.g., defined by a standard), e.g., all carriers in the two sets use the same scheduling parameter, then the base station may not need to indicate the correspondence relationship to the UE. Or, if the correspondence relationship is selected by the UE, e.g., the UE selects the carrier D1 in the set SetD of the candidate uplink carrier to conduct uplink transmission and D1 use the same scheduling parameter as that of the carrier C1 in SetC, then the UE may need to send to the base station the correspondence relationship between D1 and C1.

In addition, because it is needed for the uplink transmission of the UE to follow a timing relationship between the uplink and downlink, there is a delay from the time when a clear carrier is listened by the UE to the time when the UE conducts uplink data transmission. During this delay, the UE needs to send a reserved signal or a reserved channel over the above selected clear carrier to reserve a channel. The reserved signal may be a reference signal, a control channel or control/broadcast information.

### Example 3

The number of the uplink carriers scheduled by a base station is less than or equal to the uplink CA capability of the UE, that is, the maximum number of carriers that can be aggregated by the UE to transmit PUSCH.

After receiving a scheduling grant sent by a base station, the UE may listen the uplink carriers scheduled by the base station. If the number of the available carriers in the scheduled set is less than the uplink CA capability of the UE, the UE may listen other non-scheduled carriers. If a clear carrier is found or detected, the UE may send the listening result and the condition of the scheduling parameter used by the clear carrier to the base station.

Because it is needed for the uplink transmission of the UE to follow a timing relationship between the uplink and downlink, there is a delay from the time when a clear carrier is listened by the UE to the time when the UE conducts uplink data transmission. During this delay, the UE needs to send a reserved signal/channel over the above selected clear carrier to reserve the channel. The reserved signal/channel may be an uplink reference signal, an uplink control channel or control/broadcast information. The listening result of the non-scheduled aggregation carriers which is listened by the UE and the condition of the used scheduling parameter(s) of the carriers may be sent to the base station over the reserved signal during this time period. For example, control information may be used to feed the above information back. The UE may also feed the above information back over licensed carriers or PCell.

The UE may select n carriers for data transmission according to a listening or carrier selecting result, n<=C_{UL} and C_{UL} is the maximum number of carriers that can be aggregated by the UE to transmit PUSCH.

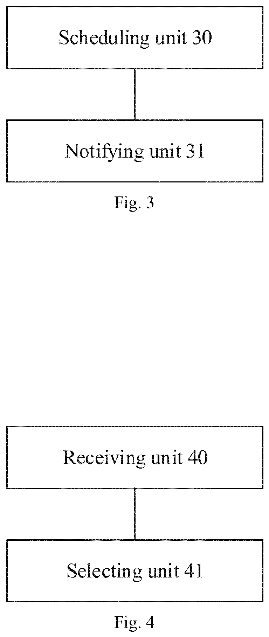

Fig. 3 is a block diagram showing a network element at a network side according to an embodiment of the present disclosure. As shown in Fig. 3, the network element at the network side provided by an embodiment of the present disclosure includes a scheduling unit 30 and a notifying unit 31.

The scheduling unit 30 is configured to schedule an unlicensed uplink carrier for a User Equipment (UE). A capability of the network element at the network side for scheduling the number of unlicensed uplink carriers for the UE is greater than the number of carriers that is supported by an uplink carrier aggregation capability of the UE, or the capability of the network side for scheduling the number of unlicensed uplink carrier for the UE is less than or equal to the number of carriers that is supported by an uplink carrier aggregation capability of the UE.

The notifying unit 31 is configured to notify the UE of a scheduling parameter of the scheduled unlicensed uplink carriers.

In an embodiment of the present disclosure, if the capability of the network element at the network side for scheduling the number of unlicensed uplink carriers for the UE is less than or equal to the number of carriers that is supported by an uplink carrier aggregation capability of the UE, the notifying unit 31 is further configured to: notify the UE of a set of candidate uplink carriers capable of being used for uplink data transmission; notify the UE of a scheduling parameter of a carrier in the set of the candidate uplink carriers; or notify the UE of a correspondence relationship between a carrier in the set of the candidate uplink carriers which uses the same scheduling parameter as the scheduling parameter of the unlicensed uplink carrier scheduled for the UE and the unlicensed uplink carrier scheduled for the UE. In this way, the UE preferentially selects the carrier capable of being used for uplink data transmission from the scheduled unlicensed uplink carriers, and when the number of the selected uplink carriers is less than the number of carriers that is supported by an uplink carrier aggregation capability of the UE, the UE selects a carrier capable of being used for uplink data transmission from the set of the candidate uplink carriers.

The number of the carriers in the set of the candidate uplink carriers is greater than, less than or equal to the number of carriers that is supported by an uplink carrier aggregation capability of the UE.

In an embodiment of the present disclosure, the network side uses control signaling or scheduling signaling to schedule one or more un-licensed uplink carriers for the UE. The scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

On the basis of the network element at the network side shown in Fig.3, the network element at the network provided by an embodiment of the present disclosure further includes a receiving unit (not shown) and an indicating unit (not shown).

The receiving unit is configured to, if the capability of the network element at the network side for scheduling the number of unlicensed uplink carriers for the UE is less than or equal to the number of carriers that is supported by an uplink carrier aggregation capability of the UE and the number of available carriers in the scheduled unlicensed uplink carriers is less than the uplink carrier aggregation capability of the UE, receive a scheduling parameter of other non-scheduled clear carriers that are listened by the UE, the scheduling parameter of the other non-scheduled clear carriers is reported by the UE.

The indicating unit is configured to indicate the UE to select a carrier capable of being used for uplink data transmission from the clear carriers.

In an embodiment of the present disclosure, the scheduling parameter may include at least one of a time-frequency resource allocation parameter, frequency-hopping, a modulation and encoding scheme, a redundancy version and a transmit power control (TPC) instruction of a physical uplink shared channel (PUSCH).

In an embodiment of the present disclosure, the network element at the network side may include network side devices such as a base station, a controller of the base station, a mobility management entity (MME) and the like.

It can be appreciated by those skilled in the art that the functions implemented by the processing units in the network element at the network side shown in Fig. 3 may be understood with reference to the descriptions in the above embodiments regarding the methods for selecting an uplink carrier. The functions of the units in the network element at the network side shown in Fig. 3 may be implemented with programs executable by a processor or a specific logic circuit.

Fig. 4 is a block diagram showing a structure of a UE according to an embodiment of the present disclosure. As shown in Fig. 4, the UE provided by an embodiment of the present disclosure may include a receiving unit 40 and a selecting unit 41.

The receiving unit 40 is configured to receive a scheduling parameter of unlicensed uplink carriers that a network side schedules for the UE.

The selecting unit 41 is configured to select a carrier capable of being used for uplink data transmission from notified un-licensed uplink carriers. A capability of the network side for scheduling a number of unlicensed uplink carriers for the UE is greater than the number of carriers that is supported by an uplink carrier aggregation capability of the UE, or the capability of the network side for scheduling the number of unlicensed uplink carriers for the UE is less than or equal to the number of carriers that is supported by an uplink carrier aggregation capability of the UE.

In an embodiment of the present disclosure, if the capability of the network side for scheduling the number of unlicensed uplink carriers for the UE is greater than the number of carriers that is supported by an uplink carrier aggregation capability of the UE, the number of the carriers capable of being used for uplink data transmission which are selected by the selecting unit 41 from notified unlicensed uplink carriers is less than or equal to the number of carriers that is supported by an uplink carrier aggregation capability of the UE.

In an embodiment of the present disclosure, if the capability of the network side for scheduling the number of unlicensed uplink carriers for the UE is less than or equal to the number of carriers that is supported by an uplink carrier aggregation capability of the UE, the receiving unit 40 is further configured to receive a set of candidate uplink carriers capable of being used for uplink data transmission which are sent by the network side and a scheduling parameter of a carrier in the set of the candidate uplink carriers.

Accordingly, the selecting unit 41 is further configured to preferentially select a carrier capable of being used for uplink data transmission from the scheduled unlicensed uplink carriers according to the scheduling parameter; and when the number of the selected uplink carriers is less than the number of carriers that is supported by an uplink carrier aggregation capability of the UE, select a carrier capable of being used for uplink data transmission from the set of the candidate uplink carriers.

The number of the carriers in the set of the candidate uplink carriers is greater than, less than or equal to the number of carriers that is supported by an uplink carrier aggregation capability of the UE.

In an embodiment of the present disclosure, the network side may use control signaling or scheduling signaling to schedule one or more unlicensed uplink carriers for the UE. A scheduling parameter of a carrier in the set of the candidate uplink carriers is the same as that of a scheduled unlicensed uplink carrier, or scheduling parameters of one or more carriers in the set of the candidate uplink carriers are the same as those of the one or more scheduled unlicensed uplink carriers.

On the basis of the UE shown in Fig.4, the UE provided by an embodiment of the present disclosure further includes a listening unit (not shown) and a sending unit (not shown).

The listening unit is configured to, if the capability of the network side for scheduling the number of unlicensed uplink carriers for the UE is less than or equal to the number of carriers that is supported by an uplink carrier aggregation capability of the UE and the number of available carriers in the scheduled unlicensed uplink carriers is less than the uplink carrier aggregation capability of the UE, listen other non-scheduled clear carriers.

The sending unit is configured to send information of detected clear carriers and a scheduling parameter of the clear carriers to the network side.

In an embodiment of the present disclosure, before the clear carriers are listened by the listening unit and used by the UE for uplink data transmission, the sending unit is further configured to send to the network side a reserved signal or a reserved channel over the clear carriers. The reserved signal or the reserved channel includes at least one of an uplink reference signal, an uplink control channel, control information and broadcast information.

In an embodiment of the present disclosure, the sending unit is configured to send to the network side the information of the clear carriers, information of the scheduling parameter of the clear carriers and the reserved signal or the reserved channel over licensed carriers or a primary serving cell.

In an embodiment of the present disclosure, the scheduling parameter may include at least one of a time-frequency resource allocation parameter, frequency-hopping, a modulation and encoding scheme, a redundancy version and a transmit power control (TPC) instruction of a physical uplink shared channel (PUSCH).

In an embodiment of the present disclosure, the UE may include a mobile phone or the like.

It can be appreciated by those skilled in the art that the functions implemented by the processing units in the UE shown in Fig. 4 may be understood with reference to the descriptions in the above embodiments of the methods for selecting an uplink carrier. The functions of the units in the UE shown in Fig. 4 may be implemented with programs executable by a processor or a specific logic circuit.

There is also provided a storage medium by an embodiment of the present disclosure. Computer programs are stored in the storage medium. The computer programs are executed to perform the methods for selecting an uplink carrier according to any one of the embodiments.

In the case of no conflict, the technical solutions in the embodiments of the present disclosure may be combined with each other.

In the embodiments of the present disclosure, it can be appreciated that the disclosed methods and the smart devices may be implemented by other means. The above described device embodiments are merely exemplary embodiments, for example, the division of the described units is one kind of logic division and the practical implementation may be realized in other ways (e.g., a plurality of units or components can be combined or integrated onto other system, or some features may be ignored or may not be performed). In addition, the coupling, direct coupling or communication connection between the displayed or discussed components may be some interfaces or indirect coupling or communication connection between devices and units, and may be electrical, mechanical or other forms of coupling.

The above described units which are illustrated as the separate components may be physically separated or not. The components which are shown as units may be physical units or not, that is to say, the components may be placed on a single location or distributed over a plurality of network units. Some or all of units may be selected according to actual needs to implement the purpose of the present disclosure.

In addition, all of the functional units in the embodiments of the present disclosure may be integrated in one second processing unit, or the functional units may be standalone units, or two or more of the functional units may be integrated into one unit. The above integrated units may be implemented in a form of hardware or combination of hardware and software.

The foregoing descriptions are merely exemplary embodiments of the present disclosure and are not intended to limit the scope of the present disclosure. It is obvious for those skilled in the art that many changes and modifications can be made to the present disclosure and these changes and modifications should be encompassed in the protection scope of the present disclosure.

### Industrial applicability

In the technical solutions provide by the embodiments of the present disclosure, in the case when a capability of the network side for scheduling a number unlicensed uplink carrier number for the UE is less than or equal to the number of carriers that is supported by an uplink carrier aggregation capability of the UE, if the UE cannot select an carrier capable of being used for uplink data transmission from the scheduled unlicensed uplink carriers, the UE may select a carrier capable of being used for uplink data transmission from the notified set of the candidate carrier, or may select a carrier capable of being used for uplink data transmission from the currently listened clear carriers to enable the UE to select uplink carriers for uplink data transmission. The present disclosure can improve efficiency for transmitting uplink data by the UE and thereby the UE can select uplink carriers as many as possible for uplink data transmission.

## Claims

1. A method for selecting an uplink carrier applied in a Long Term Evolution, LTE, licensed Assisted Access, LAA, system, comprising:
scheduling (101), by a network side, at least one unlicensed uplink carrier for a User Equipment, UE, wherein a capability of the network side for scheduling the number of unlicensed uplink carriers for the UE is greater than the number of carriers that is supported by an uplink carrier aggregation capability of the UE, or the capability of the network side for scheduling the number of unlicensed uplink carriers for the UE is less than or equal to the number of carriers that is supported by the uplink carrier aggregation capability of the UE; and
notifying (102) the UE of a scheduling parameter of the scheduled unlicensed uplink carrier so that the UE selects a carrier capable of being used for uplink data transmission from notified unlicensed uplink carriers according to the scheduling parameter;
wherein the scheduling parameter comprises at least one of a time-frequency resource allocation parameter, frequency-hopping, a modulation and encoding scheme, a redundancy version and a Transmit power Control, TPC, instruction of a Physical Uplink Shared Channel, PUSCH;
and wherein if the capability of the network side for scheduling the number of unlicensed uplink carriers for the UE is less than or equal to the number of carriers that is supported by the uplink carrier aggregation capability of the UE and the number of available carriers in the scheduled unlicensed uplink carriers is less than the uplink carrier aggregation capability of the UE, a listening result reported by the UE for other non-scheduled clear carriers that are listened by the UE and a scheduling parameter of the other non-scheduled clear carriers listened by the UE are received by the network side.

2. The method according to claim 1, wherein control signaling is used by the network side to schedule the at least one unlicensed uplink carrier for the UE.

3. The method according to claim 1, wherein if the capability of the network side for scheduling the number of unlicensed uplink carriers for the UE is less than or equal to the number of carriers that is supported by the uplink carrier aggregation capability of the UE, the network side further notifies the UE of a set of candidate uplink carriers capable of being used for uplink data transmission;
wherein the network side further notifies the UE of a scheduling parameter of a carrier in the set of the candidate uplink carriers, or the network side further notifies the UE of a correspondence relationship between a carrier in the set of the candidate uplink carriers which uses the same scheduling parameter as the scheduling parameter of the unlicensed uplink carrier scheduled for the UE and the unlicensed uplink carrier scheduled for the UE; and
wherein the scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

4. A method for selecting an uplink carrier applied in a Long Term Evolution, LTE, licensed Assisted Access, LAA, system, comprising:
receiving (201), by an User Equipment, UE, a scheduling parameter of at least one unlicensed uplink carrier that a network side schedules for the UE; and
selecting (202), by the UE, a carrier capable of being used for uplink data transmission from notified unlicensed uplink carriers;
wherein a capability of the network side for scheduling the number of unlicensed uplink carriers for the UE is greater than the number of carriers that is supported by an uplink carrier aggregation capability of the UE, or the capability of the network side for scheduling the number of unlicensed uplink carriers for the UE is less than or equal to the number of carriers that is supported by the uplink carrier aggregation capability of the UE;
wherein the scheduling parameter comprises at least one of a time-frequency resource allocation parameter, frequency-hopping, a modulation and encoding scheme, a redundancy version and a Transmit power Control, TPC, instruction of a Physical Uplink Shared Channel, PUSCH;
and wherein if the capability of the network side for scheduling the number of unlicensed uplink carriers for the UE is less than or equal to the number of carriers that is supported by the uplink carrier aggregation capability of the UE and the number of available carriers in the scheduled unlicensed uplink carriers is less than the uplink carrier aggregation capability of the UE, the UE listens other non-scheduled clear carriers and sends the listened information of the clear carriers and scheduling parameters of the clear carriers to the network side.

5. The method according to claim 4, wherein control signaling is used by the network side to schedule the at least one unlicensed uplink carrier for the UE.

6. The method according to claim 4, wherein if the capability of the network side for scheduling unlicensed uplink carrier number for the UE is less than or equal to the number of carriers that is supported by the uplink carrier aggregation capability of the UE, the UE receives a set of candidate uplink carriers capable of being used for uplink data transmission which are sent by the network side;
wherein the scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

7. The method according to claim 4,
wherein before the UE finds clear carriers and the UE transmits uplink data using the clear carriers, the method further comprises:
sending, by the UE, a reserved signal or a reserved channel to the network side over the clear carriers;
wherein the reserved signal or the reserved channel comprises at least one of an uplink reference signal, an uplink control channel, control information and broadcast information;
wherein the UE sends to the network side the information of the clear carriers, information of the scheduling parameter of the clear carriers and the reserved signal or the reserved channel over licensed carriers or a primary serving cell.

8. A network element at a network side applied in a LTE licensed Assisted Access, LAA, system, comprising a scheduling unit (30), a receiving unit and a notifying unit (31), wherein:
the scheduling unit (30) is configured to schedule at least one unlicensed uplink carrier for a User Equipment, UE, wherein a capability of the network element at the network side for scheduling the number of unlicensed uplink carriers for the UE is greater than the number of carriers that is supported by an uplink carrier aggregation capability of the UE, or the capability of the network element at the network side for scheduling the number of unlicensed uplink carriers for the UE is less than or equal to the number of carriers that is supported by the uplink carrier aggregation capability of the UE;
the notifying unit (31) is configured to notify the UE of a scheduling parameter of the scheduled unlicensed uplink carrier so that the UE selects a carrier capable of being used for uplink data transmission from the notified unlicensed uplink carrier;
wherein the scheduling parameter comprises at least one of a time-frequency resource allocation parameter, frequency-hopping, a modulation and encoding scheme, a redundancy version and a Transmit power Control, TPC, instruction of a Physical Uplink Shared Channel, PUSCH;
and the receiving unit is configured to, if the capability of the network element at the network side for scheduling the number of unlicensed uplink carriers for the UE is less than or equal to the number of carriers that is supported by the uplink carrier aggregation capability of the UE and the number of available carriers in the scheduled unlicensed uplink carriers is less than the uplink carrier aggregation capability of the UE, receive a scheduling parameter of other non-scheduled clear carriers listened by the UE, wherein the scheduling parameter of the other non-scheduled clear carriers are reported by the UE .

9. The network element according to claim 8, wherein if the capability of the network element at the network side for scheduling the number of unlicensed uplink carriers for the UE is less than or equal to the number of carriers that is supported by the uplink carrier aggregation capability of the UE, the notifying unit is further configured to notify the UE of a set of candidate uplink carriers capable of being used for uplink data transmission;
wherein the notifying unit (31) is further configured to notify the UE of a scheduling parameter of a carrier in the set of the candidate uplink carriers, or the notifying unit is further configured to notify the UE of a correspondence relationship between a carrier in the set of the candidate uplink carriers which uses the same scheduling parameter as the scheduling parameter of the unlicensed uplink carrier scheduled for the UE and the unlicensed uplink carrier scheduled for the UE;
wherein the scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

10. The network element according to claim 8, wherein the network element further comprises an indicating unit, wherein the indicating unit is configured to indicate the UE to select a carrier capable of being used for uplink data transmission from the clear carriers.

11. A User Equipment, UE, applied in a LTE licensed Assisted Access, LAA, system, comprising a receiving unit (40), a listening unit, a sending unit and a selecting unit (41), wherein:
the receiving unit (40) is configured to receive a scheduling parameter of at least one unlicensed uplink carrier that a network side schedules for the UE; and
the selecting unit (41) is configured to select a carrier capable of being used for uplink data transmission from the notified unlicensed uplink carrier;
wherein a capability of a network side for scheduling the number of unlicensed uplink carriers for the UE is greater than the number of carriers that is supported by an uplink carrier aggregation capability of the UE, or the capability of the network side for scheduling the number of unlicensed uplink carriers for the UE is less than or equal to the number of carriers that is supported by the uplink carrier aggregation capability of the UE;
wherein the scheduling parameter comprises at least one of a time-frequency resource allocation parameter, frequency-hopping, a modulation and encoding scheme, a redundancy version and a Transmit power Control, TPC, instruction of a Physical Uplink Shared Channel, PUSCH;
the listening unit is configured to, if the capability of the network side for scheduling the number of unlicensed uplink carriers for the UE is less than or equal to the number of carriers that is supported by the uplink carrier aggregation capability of the UE and the number of available carriers in the scheduled unlicensed uplink carriers is less than the uplink carrier aggregation capability of the UE, listen other non-scheduled clear carriers; and
the sending unit is configured to send information of the found clear carriers and scheduling parameters of the clear carriers to the network side.

12. The UE according to claim 11, wherein if the capability of the network side for scheduling unlicensed uplink carrier number for the UE is less than or equal to the number of carriers that is supported by the uplink carrier aggregation capability of the UE, the receiving unit is further configured to receive a set of candidate uplink carriers capable of being used for uplink data transmission which are sent by the network side; and
wherein the scheduling parameter of the carrier in the set of the candidate uplink carriers is the same as that of the scheduled unlicensed uplink carrier, or scheduling parameters of one or more carriers in the set of the candidate uplink carriers are the same as those of the one or more scheduled unlicensed uplink carriers.

13. The UE according to claim 11,
wherein before the listening unit finds clear carriers and the UE transmits uplink data using the clear carriers, the sending unit is further configured to send to the network side a reserved signal or a reserved channel over the clear carriers;
wherein the reserved signal or the reserved channel comprises at least one of an uplink reference signal, an uplink control channel, control information and broadcast information;
wherein the sending unit is configured to send to the network side the information of the clear carriers, information of the scheduling parameter of the clear carriers and the reserved signal or the reserved channel over licensed carriers or a primary serving cell.

14. A storage medium, for storing computer programs which are configured to perform the method for selecting an uplink carrier according to any one of claims 1-7 when run on a computer.

## Patentansprüche

1. Verfahren zur Auswahl eines Aufwärtsträgers, der in einem LTE-System (Long Term Evolution) mit lizenzgestütztem Zugang (LAA) verwendet wird, umfassend:
Einplanen (101), durch eine Netzwerkseite, mindestens eines unlizenzierten Uplink-Trägers für ein Benutzergerät, UE, wobei eine Fähigkeit der Netzwerkseite zum Einplanen der Anzahl von unlizenzierten Uplink-Trägern für das UE größer ist als die Anzahl von Trägern, die durch eine Uplink-Trägeraggregationsfähigkeit des UE unterstützt wird, oder die Fähigkeit der Netzwerkseite zum Einplanen der Anzahl von unlizenzierten Uplink-Trägern für das UE kleiner als oder gleich der Anzahl von Trägern ist, die durch die Uplink-Trägeraggregationsfähigkeit des UE unterstützt wird; und
Benachrichtigung (102) des UE über einen Planungsparameter des geplanten unlizenzierten Uplink-Trägers, so dass das UE einen Träger, der für die Uplink-Datenübertragung verwendet werden kann, aus den benachrichtigten unlizenzierten Uplink-Trägern gemäß dem Planungsparameter auswählt;
wobei der Planungsparameter mindestens einen der folgenden Parameter umfasst: einen Parameter für die Zeit-Frequenz-Ressourcenzuweisung, Frequenzsprungverfahren, ein Modulations- und Codierungsschema, eine Redundanzversion und eine Anweisung zur Sendeleistungssteuerung, TPC, eines gemeinsam genutzten physikalischen Aufwärtskanals PUSCH;
und wobei, wenn die Fähigkeit der Netzseite zum Planen der Anzahl von unlizenzierten Uplink-Trägern für das UE kleiner oder gleich der Anzahl von Trägern ist, die von der Uplink-Trägeraggregationsfähigkeit des UE unterstützt wird, und die Anzahl von verfügbaren Trägern in den geplanten unlizenzierten Uplink-Trägern kleiner als die Uplink-Trägeraggregationsfähigkeit des UE ist, ein von dem UE gemeldetes Abhörergebnis für andere nicht geplante freie Träger, die von dem UE abgehört werden, und ein Planungsparameter der anderen nicht geplanten freien Träger, die von dem UE abgehört werden, von der Netzseite empfangen werden.

2. Verfahren nach Anspruch 1, wobei die Steuersignalisierung von der Netzseite verwendet wird, um den mindestens einen unlizenzierten Uplink-Träger für das UE zu planen.

3. Verfahren nach Anspruch 1, wobei, wenn die Fähigkeit der Netzseite, die Anzahl der unlizenzierten Uplink-Träger für das UE einzuplanen, kleiner oder gleich der Anzahl der Träger ist, die von der Uplink-Trägeraggregationsfähigkeit des UE unterstützt wird, die Netzseite das UE ferner über einen Satz von Kandidaten-Uplink-Trägern benachrichtigt, die für die Uplink-Datenübertragung verwendet werden können;
wobei die Netzseite ferner das UE über einen Planungsparameter eines Trägers in der Menge der in Frage kommenden Uplink-Träger benachrichtigt, oder die Netzseite ferner das UE über eine Korrespondenzbeziehung zwischen einem Träger in der Menge der in Frage kommenden Uplink-Träger, der denselben Planungsparameter wie den Planungsparameter des für das UE geplanten unlizenzierten Uplink-Trägers verwendet, und dem für das UE geplanten unlizenzierten Uplink-Träger benachrichtigt; und
wobei der Planungsparameter des Trägers in der Gruppe der Kandidaten für die Aufwärtsstrecke der gleiche ist wie der des geplanten unlizenzierten Trägers für die Aufwärtsstrecke, oder die Planungsparameter eines oder mehrerer Träger in der Gruppe der Kandidaten für die Aufwärtsstrecke die gleichen sind wie die des einen oder der mehreren geplanten unlizenzierten Träger für die Aufwärtsstrecke.

4. Verfahren zur Auswahl eines Aufwärtsträgers, der in einem LTE-System (Long Term Evolution) mit lizenzgestütztem Zugang (LAA) verwendet wird, umfassend:
Empfangen (201) eines Planungsparameters von mindestens einem unlizenzierten Uplink-Träger, den eine Netzseite für den UE plant, durch ein Benutzergerät UE; und
Auswahl (202) eines Trägers, der für die Datenübertragung in der Aufwärtsrichtung verwendet werden kann, aus den angemeldeten unlizenzierten Trägern für die Aufwärtsrichtung durch das Endgerät;
wobei eine Fähigkeit der Netzseite zum Planen der Anzahl von unlizenzierten Uplink-Trägern für das UE größer ist als die Anzahl von Trägern, die von einer Uplink-Trägeraggregationsfähigkeit des UE unterstützt wird, oder die Fähigkeit der Netzseite zum Planen der Anzahl von unlizenzierten Uplink-Trägern für das UE kleiner oder gleich der Anzahl von Trägern ist, die von der Uplink-Trägeraggregationsfähigkeit des UE unterstützt wird;
wobei der Planungsparameter mindestens einen der folgenden Parameter umfasst: einen Parameter für die Zeit-Frequenz-Ressourcenzuweisung, Frequenzsprungverfahren, ein Modulations- und Codierungsschema, eine Redundanzversion und eine Anweisung zur Sendeleistungssteuerung, TPC, eines gemeinsam genutzten physikalischen Aufwärtskanals PUSCH;
und wobei, wenn die Fähigkeit der Netzseite zum Planen der Anzahl von unlizenzierten Uplink-Trägern für das UE kleiner oder gleich der Anzahl von Trägern ist, die von der Uplink-Trägeraggregationsfähigkeit des UE unterstützt wird, und die Anzahl von verfügbaren Trägern in den geplanten unlizenzierten Uplink-Trägern kleiner als die Uplink-Trägeraggregationsfähigkeit des UE ist, das UE andere nicht geplante freie Träger abhört und die abgehörten Informationen der freien Träger und Planungsparameter der freien Träger an die Netzseite sendet.

5. Verfahren nach Anspruch 4, wobei die Steuersignalisierung von der Netzseite verwendet wird, um den mindestens einen unlizenzierten Uplink-Träger für das UE zu planen.

6. Verfahren nach Anspruch 4, wobei, wenn die Fähigkeit der Netzseite zur Planung der unlizenzierten Uplink-Trägeranzahl für das UE kleiner oder gleich der Anzahl der Träger ist, die von der Uplink-Trägeraggregationsfähigkeit des UE unterstützt wird, das UE einen Satz von Kandidaten-Uplink-Trägern empfängt, die für die Uplink-Datenübertragung verwendet werden können und von der Netzseite gesendet werden; wobei der Planungsparameter des Trägers in der Gruppe der Kandidaten für die Aufwärtsstrecke der gleiche ist wie der des geplanten unlizenzierten Trägers für die Aufwärtsstrecke, oder die Planungsparameter eines oder mehrerer Träger in der Gruppe der Kandidaten für die Aufwärtsstrecke die gleichen sind wie die des einen oder der mehreren geplanten unlizenzierten Träger für die Aufwärtsstrecke.

7. Verfahren nach Anspruch 4,
wobei, bevor das UE freie Träger findet und das UE Aufwärtsdaten unter Verwendung der freien Träger überträgt, das Verfahren ferner umfasst:
Senden eines reservierten Signals oder eines reservierten Kanals durch das UE an die Netzseite über die freien Träger;
wobei das reservierte Signal oder der reservierte Kanal mindestens eines der folgenden Elemente umfasst: ein Aufwärtsreferenzsignal, einen Aufwärtssteuerkanal, Steuerinformationen und Rundfunkinformationen;
wobei das UE die Informationen über die freien Träger, Informationen über die Planungsparameter der freien Träger und das reservierte Signal oder den reservierten Kanal über lizenzierte Träger oder eine primär bedienende Zelle an die Netzseite sendet.

8. Netzwerkelement auf einer Netzwerkseite, das in einem LTE-System mit lizenzunterstütztem Zugang (LAA) eingesetzt wird, mit einer Planungseinheit (30), einer Empfangseinheit und einer Benachrichtigungseinheit (31), wobei:
die Planungseinheit (30) so konfiguriert ist, dass sie mindestens einen unlizenzierten Uplink-Träger für ein Benutzergerät, UE, plant, wobei eine Fähigkeit des Netzelements auf der Netzseite zum Planen der Anzahl von unlizenzierten Uplink-Trägern für das UE größer ist als die Anzahl von Trägern, die von einer Uplink-Trägeraggregationsfähigkeit des UE unterstützt wird, oder die Fähigkeit des Netzelements auf der Netzseite zum Planen der Anzahl von unlizenzierten Uplink-Trägern für das UE kleiner als oder gleich der Anzahl von Trägern ist, die von der Uplink-Trägeraggregationsfähigkeit des UE unterstützt wird;
die Meldeeinheit (31) so konfiguriert ist, dass sie dem UE einen Planungsparameter des geplanten unlizenzierten Uplink-Trägers mitteilt, so dass das UE einen Träger auswählt, der für die Uplink-Datenübertragung von dem mitgeteilten unlizenzierten Uplink-Träger verwendet werden kann;
wobei der Planungsparameter mindestens einen der folgenden Parameter umfasst: einen Parameter für die Zeit-Frequenz-Ressourcenzuweisung, Frequenzsprungverfahren,
ein Modulations- und Codierungsschema, eine Redundanzversion und eine Anweisung zur Sendeleistungssteuerung, TPC, eines gemeinsam genutzten physikalischen Aufwärtskanals PUSCH;
und die Empfangseinheit so konfiguriert ist, dass sie, wenn die Fähigkeit des Netzelements auf der Netzseite zum Einplanen der Anzahl von unlizenzierten Uplink-Trägern für das UE kleiner oder gleich der Anzahl von Trägern ist, die von der Uplink-Trägeraggregationsfähigkeit des UE unterstützt wird, und die Anzahl von verfügbaren Trägern in den eingeplanten unlizenzierten Uplink-Trägern kleiner als die Uplink-Trägeraggregationsfähigkeit des UE ist, einen Einplanungsparameter von anderen nicht eingeplanten freien Trägern, die von dem UE abgehört werden, empfängt, wobei der Einplanungsparameter der anderen nicht eingeplanten freien Träger von dem UE berichtet wird.

9. Netzelement nach Anspruch 8, wobei, wenn die Fähigkeit des Netzelements auf der Netzseite zum Einplanen der Anzahl unlizenzierter Uplink-Träger für das UE kleiner oder gleich der Anzahl von Trägern ist, die von der Uplink-Trägeraggregationsfähigkeit des UE unterstützt wird, die Meldeeinheit ferner so konfiguriert ist, dass sie das UE über einen Satz von Kandidaten-Uplink-Trägern informiert, die für die Uplink-Datenübertragung verwendet werden können;
wobei die Meldeeinheit (31) ferner so konfiguriert ist, dass sie dem UE einen Planungsparameter eines Trägers in der Menge der in Frage kommenden Uplink-Träger mitteilt, oder die Meldeeinheit ferner so konfiguriert ist, dass sie dem UE eine Korrespondenzbeziehung zwischen einem Träger in der Menge der in Frage kommenden Uplink-Träger, der denselben Planungsparameter wie den Planungsparameter des für das UE geplanten unlizenzierten Uplink-Trägers verwendet, und dem für das UE geplanten unlizenzierten Uplink-Träger mitteilt;
wobei der Planungsparameter des Trägers in der Gruppe der Kandidaten für die Aufwärtsstrecke der gleiche ist wie der des geplanten unlizenzierten Trägers für die Aufwärtsstrecke, oder die Planungsparameter eines oder mehrerer Träger in der Gruppe der Kandidaten für die Aufwärtsstrecke die gleichen sind wie die des einen oder der mehreren geplanten unlizenzierten Träger für die Aufwärtsstrecke.

10. Netzelement nach Anspruch 8, wobei das Netzelement ferner eine Anzeigeeinheit umfasst, wobei
die Anzeigeeinheit so konfiguriert ist, dass sie dem UE anzeigt, aus den freien Trägern einen Träger auszuwählen, der für die Uplink-Datenübertragung verwendet werden kann.

11. Benutzergerät, UE, das in einem LTE-System mit lizenzgestütztem Zugang, LAA, eingesetzt wird, mit einer Empfangseinheit (40), einer Abhöreinheit,
einer Sendeeinheit und einer Auswahleinheit (41), wobei:
die Empfangseinheit (40) so konfiguriert ist, dass sie einen Planungsparameter von mindestens einem unlizenzierten Uplink-Träger empfängt, den eine Netzseite für das UE plant; und
die Auswahleinheit (41) so konfiguriert ist, dass sie aus dem gemeldeten unlizenzierten Uplink-Träger einen Träger auswählt, der für die Uplink-Datenübertragung verwendet werden kann;
wobei eine Fähigkeit einer Netzseite zum Planen der Anzahl von unlizenzierten Uplink-Trägern für das UE größer ist als die Anzahl von Trägern, die von einer Uplink-Trägeraggregationsfähigkeit des UE unterstützt wird, oder die Fähigkeit der Netzseite zum Planen der Anzahl von unlizenzierten Uplink-Trägern für das UE kleiner oder gleich der Anzahl von Trägern ist, die von der Uplink-Trägeraggregationsfähigkeit des UE unterstützt wird;
wobei der Planungsparameter mindestens einen der folgenden Parameter umfasst: einen Parameter für die Zeit-Frequenz-Ressourcenzuweisung, Frequenzsprungverfahren, ein Modulations- und Codierungsschema, eine Redundanzversion und eine Anweisung zur Sendeleistungssteuerung, TPC, eines gemeinsam genutzten physikalischen Aufwärtskanals PUSCH;
die Abhöreinheit so konfiguriert ist, dass sie, wenn die Fähigkeit der Netzseite zum Planen der Anzahl von unlizenzierten Uplink-Trägern für das UE kleiner oder gleich der Anzahl von Trägern ist, die von der Uplink-Trägeraggregationsfähigkeit des UE unterstützt wird, und die Anzahl von verfügbaren Trägern in den geplanten unlizenzierten Uplink-Trägern kleiner als die Uplink-Trägeraggregationsfähigkeit des UE ist, andere nicht geplante freie Träger abhört; und die Sendeeinheit so konfiguriert ist, dass sie Informationen über die gefundenen freien Träger und Planungsparameter der freien Träger an die Netzseite sendet.

12. UE nach Anspruch 11, wobei, wenn die Fähigkeit der Netzseite zum Planen einer unlizenzierten Uplink-Trägeranzahl für das UE kleiner oder gleich der Anzahl von Trägern ist, die von der Uplink-Trägeraggregationsfähigkeit des UE unterstützt wird, die Empfangseinheit ferner so konfiguriert ist, dass sie einen Satz von Kandidaten-Uplink-Trägern empfängt, die für die Uplink-Datenübertragung verwendet werden können und von der Netzseite gesendet werden; und
wobei der Planungsparameter des Trägers in der Gruppe der Kandidaten für die Aufwärtsstrecke der gleiche ist wie der des geplanten unlizenzierten Trägers für die Aufwärtsstrecke, oder die Planungsparameter eines oder mehrerer Träger in der Gruppe der Kandidaten für die Aufwärtsstrecke die gleichen sind wie die des einen oder der mehreren geplanten unlizenzierten Träger für die Aufwärtsstrecke.

13. UE nach Anspruch 11,
wobei, bevor die Abhöreinheit freie Träger findet und das UE Uplink-Daten unter Verwendung der freien Träger sendet, die Sendeeinheit ferner so konfiguriert ist, dass sie ein reserviertes Signal oder einen reservierten Kanal über die freien Träger an die Netzseite sendet;
wobei das reservierte Signal oder der reservierte Kanal mindestens eines der folgenden Elemente umfasst: ein Aufwärtsreferenzsignal, einen Aufwärtssteuerkanal, Steuerinformationen und Rundfunkinformationen;
wobei die Sendeeinheit so konfiguriert ist, dass sie die Informationen über die freien Träger, die Informationen über die Planungsparameter der freien Träger und das reservierte Signal oder den reservierten Kanal über lizenzierte Träger oder eine primär bedienende Zelle an die Netzseite sendet.

14. Speichermedium zum Speichern von Computerprogrammen, die so konfiguriert sind, dass sie das Verfahren zur Auswahl eines Aufwärtsträgers nach einem der Ansprüche 1 bis 7 durchführen, wenn sie auf einem Computer ausgeführt werden.

## Revendications

1. Méthode de sélection d'une porteuse de liaison montante appliquée dans un système d'accès assisté sous licence (LAA) Long Term Evolution (LTE), comprenant:
programmation (101), par un côté du réseau, d'au moins une porteuse de liaison montante sans licence pour un équipement d'utilisateur UE, la capacité du côté du réseau à programmer le nombre de porteuses de liaison montante sans licence pour l'UE étant supérieure au nombre de porteuses pris en charge par une capacité d'agrégation de porteuses de liaison montante de l'UE, ou la capacité du côté du réseau à programmer le nombre de porteuses de liaison montante sans licence pour l'UE étant inférieure ou égale au nombre de porteuses pris en charge par la capacité d'agrégation de porteuses de liaison montante de l'UE; et
notifier (102) à l'UE un paramètre de programmation de la porteuse de liaison montante sans licence programmée, de sorte que l'UE sélectionne une porteuse pouvant être utilisée pour la transmission de données sur la liaison montante parmi les porteuses de liaison montante sans licence notifiées, en fonction du paramètre de programmation;
le paramètre de programmation comprend au moins l'un des paramètres suivants: un paramètre d'attribution des ressources temps-fréquence, le saut de fréquence, un schéma de modulation et d'encodage, une version de redondance et une instruction de contrôle de la puissance d'émission, TPC, d'un canal physique partagé sur la liaison montante PUSCH;
et dans laquelle, si la capacité du côté réseau à programmer le nombre de porteuses de liaison montante sans licence pour l'UE est inférieure ou égale au nombre de porteuses pris en charge par la capacité d'agrégation de porteuses de liaison montante de l'UE et si le nombre de porteuses disponibles dans les porteuses de liaison montante sans licence programmées est inférieur à la capacité d'agrégation de porteuses de liaison montante de l'UE, un résultat d'écoute rapporté par l'UE pour d'autres porteuses claires non programmées qui sont écoutées par l'UE et un paramètre de programmation des autres porteuses claires non programmées écoutées par l'UE sont reçus par le côté réseau.

2. Méthode selon la revendication 1, dans laquelle la signalisation de contrôle est utilisée par le côté réseau pour programmer au moins une porteuse de liaison montante sans licence pour l'UE.

3. Méthode selon la revendication 1, dans laquelle, si la capacité du côté réseau à programmer le nombre de porteuses de liaison montante sans licence pour l'UE est inférieure ou égale au nombre de porteuses pris en charge par la capacité d'agrégation de porteuses de liaison montante de l'UE, le côté réseau notifie en outre à l'UE un ensemble de porteuses de liaison montante candidates pouvant être utilisées pour la transmission de données sur la liaison montante;
le côté réseau notifie en outre à l'UE un paramètre de programmation d'une porteuse de l'ensemble des porteuses de liaison montante candidates, ou le côté réseau notifie en outre à l'UE une relation de correspondance entre une porteuse de l'ensemble des porteuses de liaison montante candidates qui utilise le même paramètre de programmation que le paramètre de programmation de la porteuse de liaison montante sans licence programmée pour l'UE et la porteuse de liaison montante sans licence programmée pour l'UE; et
dans laquelle le paramètre de programmation de la porteuse dans l'ensemble des porteuses de liaison montante candidates est le même que celui de la porteuse de liaison montante sans licence programmée, ou les paramètres de programmation d'une ou plusieurs porteuses dans l'ensemble des porteuses de liaison montante candidates sont les mêmes que ceux d'une ou plusieurs porteuses de liaison montante sans licence programmées.

4. Méthode de sélection d'une porteuse de liaison montante appliquée dans un système d'accès assisté sous licence (LAA) Long Term Evolution (LTE) comprenant:
réception (201), par un équipement utilisateur, UE, d'un paramètre de programmation d'au moins une porteuse de liaison montante sans licence qu'un côté réseau programme pour l'UE; et
sélection (202), par l'UE, d'une porteuse pouvant être utilisée pour la transmission de données sur la liaison montante parmi les porteuses de liaison montante sans licence notifiées;
dans laquelle la capacité du côté réseau à programmer le nombre de porteuses de liaison montante sans licence pour l'UE est supérieure au nombre de porteuses pris en charge par une capacité d'agrégation de porteuses de liaison montante de l'UE, ou la capacité du côté réseau à programmer le nombre de porteuses de liaison montante sans licence pour l'UE est inférieure ou égale au nombre de porteuses pris en charge par la capacité d'agrégation de porteuses de liaison montante de l'UE;
le paramètre de programmation comprend au moins l'un des paramètres suivants: un paramètre d'attribution des ressources temps-fréquence, le saut de fréquence, un schéma de modulation et d'encodage, une version de redondance et une instruction de contrôle de la puissance d'émission, TPC, d'un canal physique partagé sur la liaison montante PUSCH;
et dans laquelle, si la capacité du côté réseau à programmer le nombre de porteuses de liaison montante sans licence pour l'UE est inférieure ou égale au nombre de porteuses pris en charge par la capacité d'agrégation de porteuses de liaison montante de l'UE et si le nombre de porteuses disponibles dans les porteuses de liaison montante sans licence programmées est inférieur à la capacité d'agrégation de porteuses de liaison montante de l'UE, l'UE écoute d'autres porteuses claires non programmées et envoie les informations d'écoute des porteuses claires et les paramètres de programmation des porteuses claires au côté réseau.

5. Méthode selon la revendication 4, dans laquelle la signalisation de contrôle est utilisée par le côté réseau pour programmer au moins une porteuse de liaison montante sans licence pour l'UE.

6. Méthode selon la revendication 4, dans laquelle si la capacité du côté réseau à programmer un nombre de porteuses de liaison montante sans licence pour l'UE est inférieure ou égale au nombre de porteuses pris en charge par la capacité d'agrégation de porteuses de liaison montante de l'UE, l'UE reçoit un ensemble de porteuses de liaison montante candidates pouvant être utilisées pour la transmission de données de liaison montante qui sont envoyées par le côté réseau;
dans laquelle le paramètre de programmation de la porteuse dans l'ensemble des porteuses de liaison montante candidates est le même que celui de la porteuse de liaison montante sans licence programmée, ou les paramètres de programmation d'une ou plusieurs porteuses dans l'ensemble des porteuses de liaison montante candidates sont les mêmes que ceux d'une ou plusieurs porteuses de liaison montante sans licence programmées.

7. Méthode selon la revendication 4,
dans laquelle, avant que l'UE ne trouve des porteuses libres et que l'UE ne transmette des données de liaison montante en utilisant les porteuses libres, le procédé comprend en outre:
l'envoi, par l'UE, d'un signal réservé ou d'un canal réservé au côté réseau sur les porteuses libres;
le signal réservé ou le canal réservé comprend au moins l'un des éléments suivants: un signal de référence de liaison montante, un canal de contrôle de liaison montante, des informations de contrôle et des informations de diffusion;
dans laquelle l'UE envoie au réseau les informations sur les porteuses libres, les informations sur le paramètre d'ordonnancement des porteuses libres et le signal réservé ou le canal réservé sur des porteuses sous licence ou une cellule de desserte primaire.

8. Élément de réseau du côté du réseau appliqué dans un système d'accès assisté sous licence (LAA) LTE, comprenant une unité de programmation (30), une unité de réception et une unité de notification (31), dans lequel:
l'unité de programmation (30) est configurée pour programmer au moins une porteuse de liaison montante sans licence pour un équipement d'utilisateur UE, la capacité de l'élément de réseau côté réseau à programmer le nombre de porteuses de liaison montante sans licence pour l'UE étant supérieure au nombre de porteuses pris en charge par une capacité d'agrégation de porteuses de liaison montante de l'UE, ou la capacité de l'élément de réseau côté réseau à programmer le nombre de porteuses de liaison montante sans licence pour l'UE étant inférieure ou égale au nombre de porteuses pris en charge par la capacité d'agrégation de porteuses de liaison montante de l'UE;
l'unité de notification (31) est configurée pour notifier à l'UE un paramètre de programmation de la porteuse de liaison montante sans licence programmée, de sorte que l'UE sélectionne une porteuse pouvant être utilisée pour la transmission de données sur la liaison montante à partir de la porteuse de liaison montante sans licence notifiée;
le paramètre de programmation comprend au moins l'un des paramètres suivants: un paramètre d'attribution des ressources temps-fréquence, le saut de fréquence, un schéma de modulation et d'encodage, une version de redondance et une instruction de contrôle de la puissance d'émission, TPC, d'un canal physique partagé sur la liaison montante PUSCH;
et l'unité de réception est configurée pour, si la capacité de l'élément de réseau côté réseau à programmer le nombre de porteuses de liaison montante sans licence pour l'UE est inférieure ou égale au nombre de porteuses pris en charge par la capacité d'agrégation de porteuses de liaison montante de l'UE et si le nombre de porteuses disponibles dans les porteuses de liaison montante sans licence programmées est inférieur à la capacité d'agrégation de porteuses de liaison montante de l'UE, recevoir un paramètre de programmation d'autres porteuses claires non programmées écoutées par l'UE, les paramètres de programmation des autres porteuses claires non programmées étant signalés par l'UE.

9. Élément de réseau selon la revendication 8, dans lequel si la capacité de l'élément de réseau côté réseau à programmer le nombre de porteuses de liaison montante sans licence pour l'UE est inférieure ou égale au nombre de porteuses pris en charge par la capacité d'agrégation de porteuses de liaison montante de l'UE, l'unité de notification est en outre configurée pour notifier à l'UE un ensemble de porteuses de liaison montante candidates susceptibles d'être utilisées pour la transmission de données en liaison montante;
l'unité de notification (31) est en outre configurée pour notifier à l'UE un paramètre de programmation d'une porteuse de l'ensemble des porteuses de liaison montante candidates, ou l'unité de notification est en outre configurée pour notifier à l'UE une relation de correspondance entre une porteuse de l'ensemble des porteuses de liaison montante candidates qui utilise le même paramètre de programmation que le paramètre de programmation de la porteuse de liaison montante sans licence programmée pour l'UE et la porteuse de liaison montante sans licence programmée pour l'UE;
dans lequel le paramètre de programmation de la porteuse dans l'ensemble des porteuses de liaison montante candidates est le même que celui de la porteuse de liaison montante sans licence programmée, ou les paramètres de programmation d'une ou plusieurs porteuses dans l'ensemble des porteuses de liaison montante candidates sont les mêmes que ceux d'une ou plusieurs porteuses de liaison montante sans licence programmées.

10. Élément de réseau selon la revendication 8, dans lequel l'élément de réseau comprend en outre une unité d'indication, dans laquelle
l'unité d'indication est configurée pour indiquer à l'UE de sélectionner une porteuse capable d'être utilisée pour la transmission de données sur la liaison montante parmi les porteuses libres.

11. Équipement utilisateur, UE appliqué dans un système d'accès assisté sous licence (LAA) LTE, comprenant une unité de réception (40), une unité d'écoute,
une unité d'envoi et une unité de sélection (41), dans lequel:
l'unité de réception (40) est configurée pour recevoir un paramètre de programmation d'au moins une porteuse de liaison montante sans licence qu'un côté réseau programme pour l'UE; et
l'unité de sélection (41) est configurée pour sélectionner une porteuse capable d'être utilisée pour la transmission de données sur la liaison montante à partir de la porteuse de liaison montante sans licence notifiée;
dans lequel la capacité d'un côté du réseau à programmer le nombre de porteuses de liaison montante sans licence pour l'UE est supérieure au nombre de porteuses pris en charge par une capacité d'agrégation de porteuses de liaison montante de l'UE, ou la capacité du côté du réseau à programmer le nombre de porteuses de liaison montante sans licence pour l'UE est inférieure ou égale au nombre de porteuses pris en charge par la capacité d'agrégation de porteuses de liaison montante de l'UE;
le paramètre de programmation comprend au moins l'un des paramètres suivants: un paramètre d'attribution des ressources temps-fréquence, le saut de fréquence, un schéma de modulation et d'encodage, une version de redondance et une instruction de contrôle de la puissance d'émission, TPC, d'un canal physique partagé sur la liaison montante PUSCH;
l'unité d'écoute est configurée pour écouter d'autres porteuses libres non programmées si la capacité du réseau à programmer le nombre de porteuses de liaison montante sans licence pour l'UE est inférieure ou égale au nombre de porteuses pris en charge par la capacité d'agrégation de porteuses de liaison montante de l'UE et si le nombre de porteuses disponibles dans les porteuses de liaison montante sans licence programmées est inférieur à la capacité d'agrégation de porteuses de liaison montante de l'UE; et l'unité d'envoi est configurée pour envoyer au réseau des informations sur les porteuses libres trouvées et sur les paramètres de programmation des porteuses libres.

12. UE selon la revendication 11, dans laquelle si la capacité du côté réseau à programmer un nombre de porteuses de liaison montante sans licence pour l'UE est inférieure ou égale au nombre de porteuses pris en charge par la capacité d'agrégation de porteuses de liaison montante de l'UE, l'unité de réception est en outre configurée pour recevoir un ensemble de porteuses de liaison montante candidates susceptibles d'être utilisées pour la transmission de données de liaison montante qui sont envoyées par le côté réseau; et
dans lequel le paramètre de programmation de la porteuse dans l'ensemble des porteuses de liaison montante candidates est le même que celui de la porteuse de liaison montante sans licence programmée, ou les paramètres de programmation d'une ou plusieurs porteuses dans l'ensemble des porteuses de liaison montante candidates sont les mêmes que ceux d'une ou plusieurs porteuses de liaison montante sans licence programmées.

13. UE selon la revendication 11,
avant que l'unité d'écoute ne trouve des porteuses libres et que l'UE ne transmette des données de liaison montante en utilisant les porteuses libres, l'unité d'envoi est en outre configurée pour envoyer au côté réseau un signal réservé ou un canal réservé sur les porteuses libres;
le signal réservé ou le canal réservé comprend au moins l'un des éléments suivants: un signal de référence de liaison montante, un canal de contrôle de liaison montante, des informations de contrôle et des informations de diffusion;
l'unité d'envoi est configurée pour envoyer au réseau les informations sur les porteuses libres, les informations sur les paramètres de programmation des porteuses libres et le signal réservé ou le canal réservé sur des porteuses sous licence ou une cellule de desserte primaire.

14. Support de stockage pour stocker des programmes informatiques configurés pour exécuter la méthode de sélection d'une porteuse de liaison montante selon l'une des revendications 1 à 7 lorsqu'elle est exécutée sur un ordinateur.
